# EUROPEAN PATENT SPECIFICATION

(11) **EP 2 861 658 B1**
(45) Date of publication and mention of the grant of the patent: **21.04.2021**
(21) Application number: 13730064.6
(22) Date of filing: 17.06.2013
(51) Int. Cl.: C08K 3/34

(54) **BIODEGRADABLE COMPOSITIONS**
BIOLOGISCH ABBAUBARE ZUSAMMENSETZUNGEN
COMPOSITIONS BIODEGRADABLES

(30) Priority: 18.06.2012 GB 201210800
(43) Date of publication of application: 22.04.2015
(73) Proprietor: IMERTECH SAS, 75015 Paris (FR)
(72) Inventor: BIRD, Michael, St Austell Cornwall PL25 5HW (GB)
(74) Representative: Rushton, David John
(86) International application number: PCT/GB2013/051569
(87) International publication number: WO 2013/190274

(56) References cited:
- WO-A1-02/078944
- WO-A2-2011/146484
- US-A- 5 713 998
- US-A1- 2005 203 208

## Description

### Field of the Invention

The present invention relates to compositions which are suitable for use in the production of biopolymer products or articles, for example biopolymer films. More particularly, the present invention relates to compositions and biopolymer products, e.g. films, comprising a polymer and a particulate mineral filler comprising a particulate calcined clay which is calcined kaolin. The present invention also relates to methods of producing said compositions and biopolymer products and uses thereof. For example, the present invention relates to the use of said biopolymer products for packaging, particularly food packaging. The present invention also relates to the use of a calcined clay which is calcined kaolin, as a composting additive in said compositions and products.

### Background of the Invention

The use of plastics has become common place with applications ranging from simple film wrap to advanced composites used in the aerospace industry. In most cases, the performance of the chosen polymer by itself is insufficient to fulfil the requirements of the application and, thus, additives may also be used as illustrated in US2005203208. Such additives may include pigments to improve the aesthetics, fillers to enhance the mechanical properties, or stabilisers to prevent degradation of the polymer and loss of performance. The addition of a mineral is generally considered desirable given their low cost when compared to the polymer which is to be filled. The stability of a filled polymer can affect its 'fitness for use' in an application if a required performance lifetime is required. However, in other applications such as packaging, it can sometimes be beneficial to have accelerated degradation in order to remove the material from the environment.

The use of a filler may affect the stability of a polymer, and may change the performance. Biodegradable plastics can be broadly placed into two categories, namely biodegradable polymers and biopolymers. Biodegradable polymers are synthetic oil-based polymers that have a certain degree of inherent biodegradability, while biopolymers are either naturally occurring or derived from natural polymers. Biopolymers, unlike biodegradable polymers, can be decomposed into natural metabolic products by fungal or bacterial activity.

Biopolymer production is still relatively small and expensive when compared with the production of oil based polymers. Apart from issues relating to availability and cost, biopolymers do not yet fully meet manufacturers' requirements. There remain challenges in connection with the associated processing and material performance. In addition, there appears to have been very little research carried out on the effect a mineral has on the rate of compostability of a biopolymer.

An object of the present invention is the provision of filled biopolymers which address at least some of the issues described herein. In particular, an object of the present invention is the provision of filled biopolymers with good or improved biodegradability (e.g. compostability) which is preferably achieved without significantly compromising mechanical properties. A further objective of the present invention is to provide filled biopolymers with good or improved processability when compared with the unfilled biopolymer or known filled biopolymers.

### Summary of the Invention

The present invention is defined in and by the appended claims.

In a first aspect, the present invention provides a composition comprising a biopolymer and a particulate mineral filler wherein the particulate mineral filler comprises a particulate calcined clay, wherein
the particulate calcined clay is calcined kaolin.

The composition may comprise at least one biopolymer, which may be referred to as a biopolymer resin. The term "resin" means a polymeric material, either solid or liquid, prior to shaping into a plastic article such as a polymer film. Accordingly, certain embodiments of the present invention provide a composition comprising a biopolymer resin and a particulate mineral filler wherein the particulate mineral filler comprises a particulate calcined clay wherein the particulate calcined clay is calcined kaolin.

The biopolymers for use in accordance with certain embodiments of the present invention are capable of being molded or shaped into final articles or products such as packaging, including films and the like. As such, the composition in accordance with certain embodiments of the present invention may be referred to as a bioplastic composition. Biopolymers can be decomposed into natural metabolic products by fungal or bacterial activity.

Suitable examples of biopolymers for use in the present invention are given by one or more of the following: polylactic acid (PLA); polyglyconate; poly(dioxanone); polyhydroxyalkanoate (PHA), for example polyhydroxybutyrate (PHB), poly-3-hydroxybutyrate (P3HB), polyhydroxyvalarate (PHV), poly (3-hydroxybutyrate-co-3-hydroxyvalerate). Accordingly, in a further aspect, the present invention provides a composition comprising one or more of: polylactic acid (PLA); polyglyconate; poly(dioxanone); polyhydroxyalkanoate (PHA), for example polyhydroxybutyrate (PHB), poly-3-hydroxybutyrate (P3HB), polyhydroxyvalarate (PHV), poly (3-hydroxybutyrate-co-3-hydroxyvalerate); and a particulate mineral filler, wherein the particulate mineral filler comprises, or consists of, or consists essentially of a particulate calcined clay which is a particulate calcined kaolin, for example a particulate flash calcined kaolin. In yet a further aspect, the present invention provides a composition comprising polyhydroxyalkanoate (PHA) and a particulate mineral filler wherein the particulate mineral filler comprises, or consists of, or consists essentially of a particulate calcined clay which is a particulate calcined kaolin, for example a particulate flash calcined kaolin.

The composition may be formable or formed into a product or article, for example a biopolymer product or article. A suitable example of a product or article is a film or biopolymer film. Accordingly, certain embodiments of the present invention provide a (biopolymer) product or article, for example a (biopolymer) film, formed from or formable from a composition in accordance with the present invention. Further, certain embodiments of the present invention provide a (biopolymer) product or article, for example a (biopolymer) film, formed from or formable from a biopolymer, or biopolymer resin, and a particulate mineral filler, wherein the particulate mineral filler comprises, or consists of, or consists essentially of a particulate calcined clay, which is a particulate calcined kaolin, for example a particulate flash calcined kaolin.

In further aspects, there are provided methods of making the compositions and products or articles in accordance with the invention. Therefore, according to a further aspect of the present invention, there is provided a production process for the composition in accordance with the various aspects of the invention comprising blending a biopolymer (for example a biopolymer resin) or a precursor of a biopolymer with a particulate mineral filler wherein the particulate mineral filler comprises, or consists of, or consists essentially of particulate calcined clay wherein the particulate calcined clay is calcined kaolin.

The composition may then be formed in to a biopolymer product or article, for example a biopolymer film.

The biopolymer film can be suitably used in packaging products, including food packaging products and consumer packaging products. In a further aspect, there is provided the use of a biopolymer product or a composition in accordance with the present invention for packaging one or more items. The one or more items may be perishable, for example the one or more items may be foodstuff. Certain embodiments of the present invention also extend to the packaged products.

The term "precursor" as applied to a polymer component will be readily understood by one of ordinary skill in the art. For example, suitable precursors may include one or more of: monomers, cross-linking agents, curing systems comprising cross-linking agents and promoters, or any combination thereof. Where, according to certain embodiments of the invention, the particulate mineral filler is mixed with precursors of the biopolymer, the biopolymer composition may subsequently be formed by curing and/or polymerising the precursor components to form the desired polymer.

The calcined clay is calcined kaolin. The calcined kaolin may be partially calcined (e.g. to form metakaolin) or fully calcined. The calcined kaolin may be soak calcined or flash calcined. The calcined kaolin may be surface treated, for example surface treated with an organo-silane or a propylene glycol.

The particulate mineral filler may have a mean equivalent particle diameter (d₅₀) ranging from about 0.2µm to about 15µm, for example about 0.6µm to about 7µm, for example about 0.6µm to about 3µm or about 1.5µm or about 2µm to about 7µm, or about 1.5µm or about 2µm to about 3µm.

In a further aspect, there is provided the use of a calcined clay as a composting additive in a composition or a product comprising a biopolymer. As for the other aspects of the invention, the calcined clay is calcined kaolin. The calcined kaolin may be soak calcined or flash calcined.

There are numerous advantages associated with the present invention. For example, the present invention provides filled biopolymers with good or improved biodegradability (e.g. compostability) which is achieved without significantly compromising mechanical properties (e.g. tensile strength). Certain embodiments of the present invention also provide good or improved processability when compared with the corresponding unfilled biopolymer or known filled biopolymers. In particular, production of the filled biopolymers in connection with certain embodiments of the present invention is typically facilitated by increased melt strength and reduced polymer stickiness or tackiness

In the various aspects of the present invention, the particulate mineral filler may be a processed particulate mineral filler.

In the various aspects of the present invention, the particulate mineral filler may consist of, or consist essentially of the particulate calcined clay, wherein the particulate calcined clay is calcined kaolin. In the above the calcined material may be soak calcined or flash calcined. Advantageously, the particulate mineral filler may consist of, or consist essentially of flash calcined kaolin.

Any feature in one aspect of the invention may be applied to any other aspect or aspects of the invention, in any appropriate combination. In particular, product, device or article aspects may be applied to method and use aspects, and vice versa.

### Detailed Description of the Invention

### Biopolymer

Biopolymers are either naturally occurring or derived from naturally occurring polymers. Biopolymers may be produced by living organisms and can be decomposed into natural metabolic products by fungal or bacterial activity. The biopolymer products in accordance with the invention are biodegradable in accordance with industrial standard EN 13432. The biopolymer may be a homopolymer or a copolymer. The biopolymer may be present in an amount of about 10wt% to about 80wt% based on the total weight of the composition, for example about 20wt% to about 50wt%.

Suitable examples of biopolymers for use in the present invention are given by one or more of the following: polylactic acid (PLA); polyglyconate; poly(dioxanone); polyhydroxyalkanoate (PHA), for example polyhydroxybutyrate (PHB), poly-3-hydroxybutyrate (P3HB), polyhydroxyvalarate (PHV), poly (3-hydroxybutyrate-co-3-hydroxyvalerate). The afore-mentioned biopolymers may be combined in any combination to form a blend. The biopolymer to be filled in accordance with the present invention may be a homopolymer or a copolymer. Any of the afore-mentioned biopolymers may be provided in the form of a homopolymer or present in a copolymer.

In certain embodiments of the invention, the composition and/or product/article may have a mass loss over time of at least about 10wt% after about 4 weeks in accordance with EN 13432. For example, the present invention provides a composition or product (or article) comprising a polyhydroxyalkanoate and about 20wt% particulate mineral filler, wherein the particulate mineral filler comprises, or consists of, or consists essentially of a flash calcined kaolin, said composition or product or article having a mass loss over time of at least about 10wt% after about 4 weeks in accordance with EN 13432; and/or said composition or product may have a linear carbonyl index value (ester link) of about 8.5 or less after about 4 weeks and optionally a linear carbonyl index value (carboxylic acid) of at least about 1.5 after about 4 weeks and/or said composition or product may have a tensile strength of at least about 20MPa, for example at least about 25MPa.

As mentioned, and by way of example, PHAs are a suitable example of a biopolymer. To produce PHA, a culture of a micro-organism is placed in a suitable medium and fed appropriate nutrients. Once the population has reached a substantial level, the nutrient composition is changed to force the microorganism to synthesise PHA.

### Particulate mineral filler

Suitable particulate mineral fillers may comprise, consist of, or consist essentially of a calcined clay which is calcined kaolin. Calcined clays find use in a variety of application compositions including compositions for making paints, plastics, rubbers, inks, sealants, ceramics, cementitious products, paper and coatings. In these applications, they impart to the finished products a number of desirable properties such as brightness, opacity, hiding power, strength (in plastics) and friction (in paper). The calcined clay is calcined kaolin. The calcined kaolin may be partially calcined (e.g. metakaolin) or fully calcined. The calcined kaolin may be soak calcined or flash calcined. The calcined kaolin may be treated with an organo-silane or a propylene glycol. Advantageously, the particulate mineral filler, comprises, consists of, or consists essentially of flash calcined kaolin which provides particularly good compostability when used in the biopolymer compositions and products in accordance with the present invention.

Hereafter, the invention will tend to be discussed in terms of a calcined kaolin and in relation to aspects where the calcined kaolin is formed into a film product. However, the invention should not be construed as being limited to such embodiments.

Calcined kaolin is particularly suitable for use in accordance with the present invention. The major constituent of kaolin is kaolinite, which has the general formula Al₂(OH)₄Si₂O₅. Calcined kaolins are kaolins that have been converted from the corresponding (naturally occurring) hydrous kaolin to the dehydroxylated form by thermal methods. Depending on the conditions used, the chemical change may be partial or total. Calcination changes the kaolin structure from crystalline to amorphous. The degree to which hydrous kaolin undergoes changes in crystalline form may depend on the amount of heat to which it is subjected. Initially, dehydroxylation of the hydrous kaolin occurs on exposure to heat. At temperatures below about 850-900°C, the product is considered to be virtually but not completely dehydroxylated with the resultant amorphous structure commonly being referred to as being a metakaolin. Frequently, calcination at this temperature is referred to as partial calcination and the product may also be referred to as a partially calcined kaolin. The metakaolin state can be conveniently ascertained by acid solubility testing because the alumina in the clay (from Al₂O₃.2SiO₂) is virtually completely soluble in strong mineral acid. Further heating to temperatures above about 900-950°C results in further structural changes such as densification. Calcination at these higher temperatures is commonly referred to as being full calcination and the product is commonly referred to as fully calcined kaolin. Additional calcination may cause formation of mullite which is a very stable aluminium silicate.

Methods for making calcined kaolins are long established and well known to those skilled in the art. The furnace, kiln or other heating apparatus used to effect calcining of the hydrous kaolin may be of any known kind. A typical procedure involves heating kaolin in a kiln, for example a conventional rotary kiln. Typically, the kaolin may be introduced into the kiln as an extrudate from a pug mill or a lump feed from a drier. The typical starting moisture content may be between 10% to 25% by weight to facilitate the extrusion of the kaolin or bind the lump feed. As the kaolin proceeds through the kiln, the extrudate breaks down into pellets as a result of the calcination process. A small amount of a binder (such as alum) may be added to the kaolin to provide "green strength" to the kaolin so as to prevent the kaolin from completely breaking down into powder form during the calcination process. The temperature within the kiln should be within a specified range, and will, to a certain extent depend on whether it is desired to make fully calcined or partially calcined kaolin. A relatively low temperature of about 800°C may be used resulting in metakaolin. A higher temperature, for example, in the range of from about 900°C to about 1200°C, for example about 1050°C to about 1150°C, will result in fully calcined kaolin.

The period of time for calcination of kaolin to produce metakaolin is based upon the temperature in the kiln to which the kaolin is subjected. Generally, the higher the temperature, the shorter the calcination time, and conversely, the lower the temperature, the higher the calcination time. Any type of metakaolin is suitable for use in accordance with the present invention. Particular examples of metakaolins suitable for use in the present invention include commercially available (from Imerys), Metastar 501 ™, Opacilite ™, Argical M1000 ™, Argical M1200 S ™, Polestar 450 ™. The metakaolin may advantageously possess 12 to 18wt% of alumina as ascertained by acid solubility testing. A suitable method involves the extraction of soluble aluminium into concentrated nitric acid (Analar grade) and the concentration of aluminium in solution is determined by Inductively Coupled Plasma Atomic Emission Spectroscopy (ICP-AES) using a Thermo Electron Iris-AP Emission Spectrometer and 1000ppm Al Merck BDH Spectrosol standard solution. Particular examples of fully calcined kaolins suitable for use in the present invention include commercially available (from Imerys) Polestar 200R ™, Polestar 200P ™ , Gloma ™, Glomax LL™, Argical 88R™.

The calcination process used may be soak calcining, i.e. wherein the hydrous kaolin or clay is calcined for a period of time during which the chemistry of the material is gradually changed by the effect of heating. The calcining may, for example, be for a period of at least 1 minute, in many cases at least 10 minutes, e.g. from 30 minutes to five or more hours. Known devices suitable for carrying out soak calcining include high temperature ovens, rotary kilns and vertical kilns.

Alternatively and advantageously, the calcination process may be flash calcining, wherein typically, hydrous clay or kaolin is rapidly heated over a period of less than one second, e.g. less than 0.5 second. Flash calcination refers to heating a material at an extremely fast rate, almost instantaneously. The heating rate in a flash calciner may be of the order of 56,000°C per second or greater. It is particularly advantageous that the calcined kaolin is prepared by flash calcination, wherein the clay may, for example, be exposed to a temperature greater than 500°C for a time not more than 5 seconds. The clay may be calcined to a temperature in the range of from 550°C to 1200°C; for microsecond periods the temperature may be as high as 1500°C. The clay may be calcined to a temperature in the range of from 800°C to 1100°C; for example a temperature in the range of from 900°C to 1050°C; for example a temperature in the range of from 950°C to 1000°C. The clay may be calcined for a time less than 5 seconds; e.g. for less than 1 second; e.g. for less than 0.5 seconds; e.g. for less than 0.1 second. Flash calcination of kaolin particles gives rise to relatively rapid blistering of the particles caused by relatively rapid dehydroxylation of the kaolin. Water vapour is generated during calcination which may expand extremely rapidly, in fact generally faster than the water vapour can diffuse through the crystal structure of the particles. The pressures generated are sufficient to produce sealed voids as the interlayer hydroxyl groups are driven off, and it is the swollen interlayer spaces, voids, or blisters between the kaolin platelets which typify flash calcined kaolins and give them characteristic properties.

The flash calcination process may be carried out by injecting the (kaolin) clay into a combustion chamber or furnace wherein a vortex may be established to rapidly remove the calcined clay from the combustion chamber. A suitable furnace would be one in which a toroidal fluid flow heating zone is established such as the device described in WO 99/24360 and corresponding applications US 6334894 and US 6136740.

The particulate mineral filler, prior to calcination may be prepared by light comminution, e.g. grinding or milling, of a coarse mineral to give suitable delamination thereof and in order to provide the desired fineness and particle size distribution (psd) . The comminution may be carried out by use of beads or granules of a plastic, e.g. nylon, grinding or milling aid. Ceramic media, silica or sand may also be used. In order to improve the dispersion of the particulate mineral filler in the polymer resin, jet-milling or fluid energy milling may be used; see US 6145765 and US 3932194 for more details. The coarse mineral may be refined to remove impurities and improve physical properties using well-known procedures. The mineral may be treated by a known particle size classification procedure, e.g. screening and/or centrifuging, to obtain particles having a desired dso value and/or steepness. The particulate mineral filler may be filtered and dried.

Optionally, the calcined clay may be comminuted to the desired fineness and particle size distribution. In one particular method for preparing a calcined kaolin, a commercially available fine calcined particulate kaolin (which may, for example, have a particle size distribution such that about 79% by volume of the particles have a particle diameter less than 5µm and/or about 57% by volume of the particles have a particle diameter less than 2µm) is comminuted to the desired fineness and particle size distribution. Such a particulate calcined kaolin starting material may, for example, be the fines recovered from the hot exhaust gases which exit the calciner during the normal calcining process. Examples of such fines are described in US-5713998 and the publications referred to therein. Comminution is preferably achieved by use of conventional processing techniques such as sand grinding (e.g. wet sand grinding in suspension), milling (e.g. dry ball milling or fluid energy milling), centrifugation, particle size classification, filtration, drying and the like. Wet sand grinding is preferred, in which case the desired particle size reduction is typically achieved after a work input of about 110 kilowatt-hours per tonne, and the kaolin is then preferably filtered, dried at 80°C and milled to provide the final product. In another example, hydrous kaolin may be flash calcined by being heated rapidly for a short period (e.g. about one second), cooled and then wet sand ground, filtered, dried and milled in generally the same way as described above.

The flash calcined kaolin, for use in the compositions and (biopolymer) products, e.g. films, according to the present invention may typically have a specific gravity lower than hydrous kaolin, and sometimes also lower than soak calcined kaolin, such as, for example, less than or equal to about 2.4, for example, less than or equal to about 2.2.

The particles of the particulate mineral filler for use in the present invention may have a specific surface area (as measured by the BET liquid nitrogen absorption method ISO 5794/1) of at least about 5m²g⁻¹, e.g. at least about 7m²g⁻¹, at least about 10mg²g⁻¹ or at least about 12m²g⁻¹.

The particulate mineral filler may be dried prior to inclusion in the composition. For example, the filler may be dried before being combined with a biopolymer resin. Typically, the filler may be dried in a conventional oven at about 80°C. The biopolymer may be dried in a vacuum oven at approximately 80°C. The particulate filler may be dried to an extent such that the particulate filler has and maintains an adsorbed water (or moisture) content not greater than about 0.5wt%, for example and particularly advantageously, not greater than about 0.1wt% based on the dry weight of the particulate filler. This includes both uncoated and coated particulate mineral fillers. Low levels of adsorbed water are particularly beneficial when the filler is used to form breathable films.

Desirably, the particulate mineral filler, including when either coated or uncoated, is not susceptible to further substantial moisture pick-up. The particulate mineral filler may, for example, have a moisture level not greater than about 0.5wt%, for example not greater than about 0.1wt% after exposure to an atmosphere of 80% or more relative humidity for 40 hours at a temperature of 20°C.

The particulate mineral filler may be free or substantially free of hygroscopic or hydrophilic compounds. For example, during grinding of the particulate mineral filler, the grinding may be carried out in the absence of added hygroscopic or hydrophilic compounds, or if wet ground, any dispersant employed may be minimised and/or subsequently removed from the filler in a known manner. For example, not greater than about 0.05wt% of a hydrophilic component may be present on the particulate mineral filler based on the dry weight of the particulate mineral filler. For example, not greater than about 0.05wt% of a dispersant, for example, a hydrophilic dispersant, may be present on the particulate mineral filler based on the dry weight of the particulate mineral filler. An example of such a dispersant is sodium polyacrylate. The moisture level may be measured in a known manner, e.g. by a Karl Fischer (KF) titration apparatus. In this method, the water may be driven off from the sample by heating and then measured using the quantitative reaction of water with iodine. In coulometric KF titration, the sample is added to a pyridine-methanol solution (with iodine and sulphur dioxide as principal components). The iodine generated electrolytically at the anode, reacts with water. The amount of water can be directly determined from the quantity of electric charge required for electrolysis.

Following comminution, the particulate mineral filler may have a mean particle size (d₅₀) ranging from about 0.2µm to about 15µm, for example about 0.6µm to about 7µm, for example about 0.6µm to about 3µm or about 2µm, or about 1.5µm or about 2µm to about 7µm, or about 1.5µm or about 2µm to about 3µm.

Unless otherwise stated, particle size properties referred to herein for the particulate mineral filler or specified fillers (i.e. calcined clay, calcined kaolin etc) are as measured in a well known manner by sedimentation of the particulate mineral filler or material in a fully dispersed condition in an aqueous medium using a Sedigraph 5100 machine as supplied by Micromeritics Instruments Corporation, Norcross, Georgia, USA (telephone: +17706623620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d), less than given e.s.d values. The mean particle size d₅₀ is the value determined in this way of the particle e.s.d at which there are 50% by weight of the particles which have an equivalent spherical diameter less than that d₅₀ value. The d₉₈ and the d₉₀ are the values determined in this way of the particle e.s.d. at which there are 98% and 90% respectively by weight of the particles which have an equivalent spherical diameter less than that d₉₈ or d₉₀ value.

### Polymer compositions and products

The particulate mineral fillers in accordance with the present invention may be incorporated in compositions which may be formable or formed into biopolymer products. The biopolymer products may be suitable for use in packaging, for example food packaging. The biopolymer product may be in the form of a film which may be breathable or non-breathable.

The biopolymer product comprises a biopolymer and a particulate mineral filler wherein the filler comprises or consists of, or consists essentially of a particulate calcined clay which is calcined kaolin. The biopolymer product is formed or formable from a polymer composition comprising a biopolymer resin and a particulate mineral filler wherein the filler comprises or consists of, or consists essentially of a particulate calcined clay. The term resin means a polymer material, either solid or liquid, prior to shaping into an article such as a polymer film. Suitable biopolymer resins include thermoplastic biopolymer resins such as one or more of the following: polylactic acid (PLA); polyglyconate; poly(dioxanone); polyhydroxyalkanoate (PHA), for example polyhydroxybutyrate (PHB), poly-3-hydroxybutyrate (P3HB), polyhydroxyvalarate (PHV), poly (3-hydroxybutyrate-co-3-hydroxyvalerate). The afore-mentioned biopolymers may be combined in any combination to form a blend. The biopolymer to be filled in accordance with the present invention may be a homopolymer or a copolymer. Any of the afore-mentioned biopolymers may be provided in the form of a homopolymer or present in a copolymer.

Before use, the biopolymer resin may be dried until a required level of dryness is attained.

Optionally, the polymer product, e.g. the polymer film may further comprise one or more additives. Examples of useful additives include, but are not limited to, opacifying agents, pigments, colorants, slip agents, antioxidants, anti-fog agents, anti-static agents, anti-block agents, moisture barrier additives, gas barrier additives, hydrocarbon resins or hydrocarbon waxes.

The particulate mineral filler, which may or may not have been surface treated, may typically be present at a concentration of about 2wt% or about 10wt% to about 60wt% or about 80wt%, by weight of the final polymer product, or of the filled composition, for example, about 20wt% to about 50wt%, for example, about 20wt% to about 40wt% or about 5wt% to about 20wt%.

For use in breathable films, the particulate filler, which may or may not have been surface treated, may be incorporated in polymer compositions and is typically present at a concentration of about 30wt% to about 55wt% by weight of the final polymer film, for example, about 45wt% to about 55wt%. The biopolymer resin and filler material may be independently dried prior to mixing.

The biopolymer resin may be melted (or otherwise softened) prior to formation of the polymer product, and the polymer will not normally be subjected to any further chemical transformations. After formation of the biopolymer product, the biopolymer resin is cooled and allowed to harden.

The compositions according to the present invention can be processed to form, or to be incorporated in, products in any suitable way. The composition may be made by methods which are well known in the art generally in which a particulate mineral filler and a biopolymer resin are mixed together in suitable ratios to form a blend (so-called "compounding"). The biopolymer resin may be in a liquid form to enable the particles of the filler to be dispersed therein. Where the biopolymer resins are solid at ambient temperatures, the biopolymer resin may need to be melted before the compounding can be accomplished. In some embodiments, the particulate mineral filler may be dry blended with particles of the biopolymer resin, dispersion of the particles in the resin then being accomplished when the melt is obtained prior to forming a product such as a film from the melt, for example in an extruder itself.

In certain embodiments of the invention, the biopolymer resin and the particulate mineral filler and, if necessary, any other optional additives, may be formed into a suitable masterbatch by the use of a suitable compounder/mixer in a manner known per se, and may be pelletized, e.g. by the use of a single screw extruder or a twin-screw extruder which forms strands which may be cut or broken into pellets. The compounder may have a single inlet for introducing the filler and the biopolymer resin together. Alternatively, separate inlets may be provided for the filler and the biopolymer resin. Suitable compounders are available commercially, for example from Coperion (formerly Werner & Pfleiderer).

The compositions according to the present invention can be processed to form, or to be incorporated in, products such as films in any suitable way. Methods of making (bio)polymer films are well known to those of ordinary skill in the art and may be prepared in a conventional manner. Known methods include the use of casting, extruding and blowing processes. For example, extrusion blown film lines may be used. For those instances where combinations of polymers are used, then co-extrusion techniques may be used. Methods of co-extrusion are well known to the person of ordinary skill. Typically, two or more streams of molten polymer resin are joined into a single extrudate stream in such a way that the resins bond together but do not mix. Generally, a separate extruder is required for each stream and the extruders are linked so that the extrudates can flow together in an appropriate manner for the desired application. For making layered films, several extruders may be used in combination and fed together into a complex die that will merge each of the resin streams into a layered film or sandwich material.

The films made according to the present invention may be of a size and thickness appropriate to the final application. For example, the mean thickness of the film may be less than about 250µm, for example, about 5µm to less than about 250µm, for example about 30µm to 50µm. For breathable films, the thickness of the film may be about 5µm to about 25µm, for example about 8µm to about 18µm for example about 10µm to about 15µm.

The use of fillers in breathable films is described in WO 99/61521 and US6569527 B1.

In the manufacture of a breathable film, a blend or masterbatch of the resin and the filler may first be produced by mixing and compounding prior to the film production stages. The mixture of ingredients to be blended by compounding may include, in addition to the resin and the particulate mineral filler, other known optional ingredients employed in thermoplastic films, e.g. one or more of bonding agents, plasticisers, lubricants, anti-oxidants, ultraviolet absorbers, dyes, colourants. A bonding or tackifying agent where employed may facilitate bonding of the film after formation to another member, e.g. a nonwoven fibrous layer, or one or more non porous layers.

The resin, the filler and, if necessary, other optional additives, may be mixed by the use of a suitable compounder/mixer e.g. a Henschel mixer, a super mixer, a tumbler type mixer or the like, and kneaded and may be pelletized, e.g. by the use of a single screw extruder or a twin-screw extruder which forms strands which may be cut or broken into pellets. The masterbatch or blend, e.g. in the form of pellets, may be melted and moulded or shaped into a film by the use of a known moulding and film forming machine.

The film may be a blown film, cast film or extruded film. The film as initially formed may be generally too thick and too noisy as it tends to make a rattling sound when shaken and the film may not yet have a sufficient degree of breathability as measured by its water vapour transmission rate. Consequently, the film may be heated, e.g. to a temperature of about 5°C less than the melting point of the thermoplastic polymer or more, and then stretched to at least about 1.2 times, for example at least about 2.5 times, its original length to thin the film and make it porous.

An additional feature of the thinning process is the change in opacity of the film. As formed, the film is relatively transparent but after stretching, it becomes opaque. In addition, while the film becomes orientated during the stretching process, it also becomes softer and it does not have the degree of rattle that it does prior to stretching. Taking all these factors into consideration, and the desire to have a water vapour transmission rate of, for example, at least 100 grams per square metre per 24 hours, the film may, for example, be thinned to such an extent that it has a weight per unit area of less than about 35 grams per square metre for personal care absorbent article applications and a weight per unit area of less than about 18 grams per square metre for certain other applications.

The moulding and film forming machine may, for example, comprise an extruder equipped with a T-die or the like or an inflation moulding machine equipped with a circular die. The film production may be carried out at some time after the masterbatch production, possibly at a different manufacturing plant. In some cases, the masterbatch can directly be formed into the film without producing an intermediate product, e.g. by pelletizing.

The film can be stretched in at least a uniaxial direction at a temperature of from room temperature to the softening point of the resin in a known manner such as a roll method or a tenter method to bring about the interfacial separation of the resin and the particulate mineral filler from each other, whereby a porous film can be prepared. The stretching may be carried out by one step or by several steps. Stretch magnification determines film breakage at high stretching as well as breathability and the moisture vapour transmission of the obtained film, and so excessively high stretch magnification and excessively low stretch magnification are desirably avoided. The stretch magnification is preferably in the range of about 1.2 to 5 times, for example about 1.2 to 4 times in at least a uniaxial direction. If biaxial stretching is carried out, it is possible that, for example, stretching in a first direction is applied in the machine direction or a direction perpendicular thereto, and stretching in a second direction is then applied at right angles to the first direction. Alternatively, the biaxial stretching may be carried out simultaneously in the machine direction and the direction perpendicular thereto.

After the stretching, a heat setting treatment may be carried out if required in order to stabilise the shape of obtained voids. The heat setting treatment may be, for example, a heat setting treatment at a temperature in the range of from the softening point of the resin to a temperature less than the melting point of the resin for a period of about 0.1 to about 100 seconds. The thickness should preferably be such as to obtain film unlikely to tear or break and which has appropriate softness and good feel.

For the purposes of the present invention, a film is breathable if it has a water vapour transmission rate of at least 100g/m²/24 hours as calculated using the test method described in US-A-5695868. The breathable film may have a water vapour transmission rate of at least 3000g/m²/24 hours as calculated in accordance with ASTM E96/E96M-05. Generally, once the film is formed, it will have a weight per unit area of less than about 100 grams per square metre and after stretching and thinning its weight per unit area will be less than about 35 grams per square metre and more desirably less than about 18 grams per square metre. The porous film can be suitably utilised in applications requiring softness, for example, as the backing sheet of disposable diapers.

The porous, or breathable, film prepared in accordance with the present invention may have a suitable breathability, moisture vapour transmission and feeling as well as excellent mechanical properties and long-term adhesive properties. Therefore, the breathable film can be suitably used in products such as disposable diapers, body fluid absorbing pads and bed sheets; medical materials such as surgical gowns and base materials for hot compress; clothing materials such as jumpers, rainwear; building materials such as wallpapers and waterproof materials for roofs and house wraps; packaging materials for packaging desiccants, dehumidifying agents, deoxidizers, insecticides, disposable body warmers; packaging materials for keeping the freshness of various articles and foods; separators for the cells; and the like. The breathable film is particularly desirable as a material used in products such as disposable diapers and body fluid absorbing pads. The breathable film may in such products be formed into a composite or laminate with one or more other layers, e.g. a nonwoven fibrous layer, e.g. by an adhesive or bonding agent.

### Brief Description of the Figures

The invention will now be described, by way of example only and without limitation, with reference to the following Figures and Examples, in which:
Figure 1 is a plot of tensile strength against elongation for a number of filled biopolymer films;
Figure 2 is a linear trend line plot of specimen composting time against mass loss for a number of filled biopolymer films;
Figure 3 is a plot of peak areas of decaying ester link and growing carboxylic acid due to hydrolysis of the ester linkages for unfilled PHA;
Figure 4 is a plot of peak areas of decaying ester link and growing carboxylic acid due to hydrolysis of the ester linkages for flash calcined kaolin filled PHA;
Figure 5 is a plot of peak areas of decaying ester link and growing carboxylic acid due to hydrolysis of the ester linkages for kaolin filled PHA;
Figure 6 is a plot of peak areas of decaying ester link and growing carboxylic acid due to hydrolysis of the ester linkages for calcined kaolin filled PHA;
Figure 7 is a plot of peak areas of decaying ester link and growing carboxylic acid due to hydrolysis of the ester linkages for the calcium carbonate filled PHA;
Figure 8 is an SEM image of an unfilled PHA surface after composting;
Figure 9 is an SEM image of a flash calcined kaolin filled PHA surface after composting.

### Examples

### Test Methods and Samples

Details relating to the minerals tested are set out in Table 1. All of the minerals were uncoated apart from the calcium carbonate which was coated with a fatty acid. All of the samples are commercially available from Imerys Minerals UK Ltd.

**Table 1**

| | **Hydrous kaolin** | **Flash calcined kaolin** | **Soak calcined kaolin** | **Calcium carbonate** |
|---|---|---|---|---|
| Brightness (ISO) | 86.5 | 86.2 | 89.4 | 94.4 |
| Yellowness (ECC) | 4.2 | 2.9 | 4.4 | 0.8 |
| <2µm (%) | 95 | 60 | 53 | 71 |
| d₅₀ (µm) | 0.4 | 1.6 | 1.9 | 1.3 |
| Surface Area (m²/g) | 13.5 | 11.5 | 7.5 | 5.0 |
| pH | 4.5 | 5.5 | 6.5 | coated |

### Biopolymers

The polyhydroxyalkanoate (PHA) Ecomann PHA EM40010 semi-crystalline aliphatic bio-polyester resin was obtained from Bioresins.eu, a division of A&O FilmPAC Limited, UK. The sample obtained was dried for 4 hours at 80°C in a dry air Conair Churchill desiccant dryer.

### Measurement of film properties

All films were conditioned for a minimum of 48 hours at 23°C, 50% relative humidity prior to the evaluation of the films' physical properties.

### Tensile strength

The tensile strength of the films was measured following the method described in American Standard Test Method (ASTM) D822-91. The measurements were made on a Tinius Olsen H10KS tensometer fitted with a 1KN load cell with a separation rate of 50mm/min. Elongation was calculated from the cross head movement with the clamps set to a gauge length of 50mm. The tensile strength is quoted as the maximum in the stress versus strain curve for each specimen. The results are typically quoted as the average of six specimens.

### Colour measurements

Sample colour (CIEL* a* b*) was measured on a film stack of 10mm thickness in order to minimise any errors associated by not achieving sufficient opacity from the layering of the films. Film colour was measured utilising a Datacolor 600 Spectrophotometer, using the method described in International Standards Organisition Test Method (ISO) 7724/2, with a primary illuminant of 6500 K radiation and an observation angle of 10°.

### Compostability

Compostability was assessed in accordance with the European Standard EN 13432.

### Example 1

The minerals in Table 1, (kaolin, flash calcined kaolin, soak calcined kaolin and coated calcium carbonate), were dried at 80°C in a forced-draft oven overnight. The Ecomann PHA EM40010 semi-crystalline aliphatic bio-polyester resin was also dried for 4 hours at 80°C but in a dry air Conair Churchill desiccant dryer as it is relatively hydroscopic and readily picks up moisture from the atmosphere. The minerals were preblended with the PHA at the required ratios of filler to polymer. Masterbatches containing 10wt%, 20wt% and 30wt% mineral were prepared using a Baker Perkins twin screw extruder compounder with a die temperature of 100°C. The compounder was run at 300rpm and the feed rate adjusted to maintain a relatively constant torque of approximately 50%. After compounding, the masterbatches were dried at 60°C for 12 hours in a Conair Churchill desiccant dryer. A sample of the virgin PHA was also subjected to the same compounding regime to ensure a comparable thermal history for the reference material.

The compounder heater zones 1 (feed) to 5 (feed) were set to 105°C and zone 6 (die) to 100°C. Full compounding conditions are set out in Table 1a for the 20wt% loading.

### Cast film production of the PHA masterbatches

Cast films of 50µm gauge of the PHA masterbatches containing 10wt%, 20wt% and 30 wt% mineral were produced on a Collin E30M extruder fitted to a 150mm slot die with a 1.0mm die gap. The films were extruded onto a cast-roll set to approximately 70°C and then passed through a series of rollers to further cool the film prior to collection as a cylindrical roll. The temperature profile was set to 160°C at the die, and 160°C, 155°C, 150°C, 140°C, 135°C, 130°C in the barrel. The screw speed was 40rpm with a haul-off of 9.5m min⁻¹ with a layflat of approximately 100mm. A reference unfilled PHA film was also produced under the same processing conditions. Full blown and cast film conditions are given in Table 1b.

**Table 1a Home Compostable 20wt% Masterbatch Compounding Conditions.**

| Home Compostable Films | | | | | | | | | | |
|---|---|---|---|---|---|---|---|---|---|---|
| Compounding conditions to produce 20 wt% masterbatches | | | | | | | | | | |
| Sample | Temperature profile (°C) | | | | | | Process conditions | | | |
| | t1 | t2 | t3 | t4 | t5 | Die | Drive Speed (r/min) | Feed Rate | Drive Torque (%) | Out Put (kg/hr) |
| Set Conditions | 105 | 105 | 105 | 105 | 105 | 100 | 300 | - | - | - |
| | | | | | | | | | | |
| Unfilled PHA | 109 | 107 | 101 | 98 | 111 | 137 | 300 | 120 | 50 | 4.6 |
| Hydrous Kaolin filled PHA | 104 | 106 | 95 | 101 | 102 | 132 | 300 | 120 | 50 | 5.2 |
| Flash Calcined Kaolin filled PHA | 108 | 105 | 93 | 102 | 109 | 135 | 300 | 120 | 50 | 5.2 |
| Soak Calcined filled PHA | 103 | 106 | 99 | 103 | 101 | 125 | 300 | 120 | 50 | 5.2 |
| Calcium Carbonate filled PHA | 102 | 106 | 98 | 94 | 103 | 138 | 300 | 120 | 50 | 5.4 |

**Table 1b Home Compostable Cast Film Conditions**

| Home Compostable Films | | | | | | | | | | | |
|---|---|---|---|---|---|---|---|---|---|---|---|
| Casting conditions to produce 50 µm film. | | | | | | | | | | | |
| Sample | Temperature profile (°C) | | | | | | Process conditions | | | | |
| | Zone 1 | Zone 2 | Zone 3 | Zone 4 | Zone 5 | Zones 6-9 | Screw Speed (r/min) | Haul off (m/min) | Motor Current (amps) | Melt Temp (°C) | Melt Press (bar) (MPa) |
| Set Conditions | 130 | 135 | 140 | 150 | 155 | 160 | 40 | 9.5 | - | - | - |
| | | | | | | | | | | | |
| Unfilled PHA | 130 | 135 | 141 | 150 | 155 | 160 | 40 | 9.5 | 5.5 | 143 | 57 (5.7) |
| Hydrous Kaolin filled PHA | 130 | 136 | 139 | 150 | 155 | 160 | 40 | 9.5 | 5.9 | 142 | 89 (8.9) |
| Flash Calcined Kaolin filled PHA | 129 | 135 | 141 | 150 | 155 | 160 | 40 | 9.5 | 6.7 | 142 | 98 (9.8) |
| Soak Calcined filled PHA | 130 | 136 | 141 | 150 | 155 | 160 | 40 | 9.5 | 5.9 | 142 | 89 (8.9) |
| Calcium Carbonate filled PHA | 130 | 135 | 137 | 150 | 155 | 160 | 40 | 9.5 | 5.5 | 143 | 63 (6.3) |

### Controlled home composting trial

### (i) Composting bins and waste input materials

A controlled home composting investigation, following European standard EN 13432 was carried out to assess the effects different minerals have on the rate of decomposition of the polyhydroxyalkanoate (PHA) biodegradable polymer. Biodegradable waste was added to four 330 litre Blackwell home composting bins which had removable lids and sliding hatches fitted at ground level to permit access to the compost at the base of the bin. Each bin sat upon a perforated base which raised the compost approximately 75mm above the ground to help the maintenance of aerobic conditions within the compost. Three types of biodegradable waste were added to the compost bins, multi-purpose compost obtained from a garden centre, food waste and mature garden compost. A compost activator was also added, which contained 'friendly' bacteria to speed up the composting process.

The multi-purpose compost was peat based designed as an all purpose compost for general outdoor use. The food waste was locally obtained from a green grocer and was typically made up of fruit and vegetables which had passed their use by dates. The garden waste primarily consisted of tree leaves and grass cuttings obtained from a mature compost heap, which provided a further culture of micro-organisms. The three waste products were mixed and an equal amount added to each composting bin.

### (ii) Biodegradation of film specimens in composting bins

Circular samples of 3cm diameter were cut from each of the 50µm gauge PHA films. Each sample was weighed and placed within a separate 50µm nylon mesh bag. These specimen bags were then placed between two large screens, with a mesh size of 2cm, and inserted approximately 150mm below the surface of the compost. Specimens were removed every two weeks, washed with deionised water to remove any surface contaminants, dried in a forced air oven set to 38°C and reweighed. Degradation was monitored for 112 days and was assessed by mass loss of the specimens. Degradation of the mass loss specimens was also assessed by Fourier transform infrared spectroscopy looking at the conversion of the ester linkage peak at 1700cm⁻¹. The decomposition reaction is the hydrolysis of the ester linkages to produce hydroxyl and carboxylic terminals. A small proportion of unsaturated side chain fragments undergo oxidative cleavage of the carbon to carbon linkages, producing small amounts of low-molecular weight esters and acids.

### Improvements in PHA processability due to mineral inclusion

The following observations were made regarding the effect of including the particulate filler minerals on the processability of PHA.

In addition to high associated costs, the prominent limitation of PHA is its poor melt strength and tendency to stick to processing equipment. It was observed during compounding that the addition of a mineral in accordance with the present invention significantly improved the melt strength, resulting in almost no strand breakages during cooling and granulation. During production of the cast films the unfilled PHA was tacky and would occasionally stick to the cast roll. However, the addition of a calcined clay considerably reduced the stickiness of the polymer to the extent that film production was problem free. Other process improvements include a decreased cooling time of the filled biopolymer thus affording significant gains in processing rates.

### Film Tensile Properties

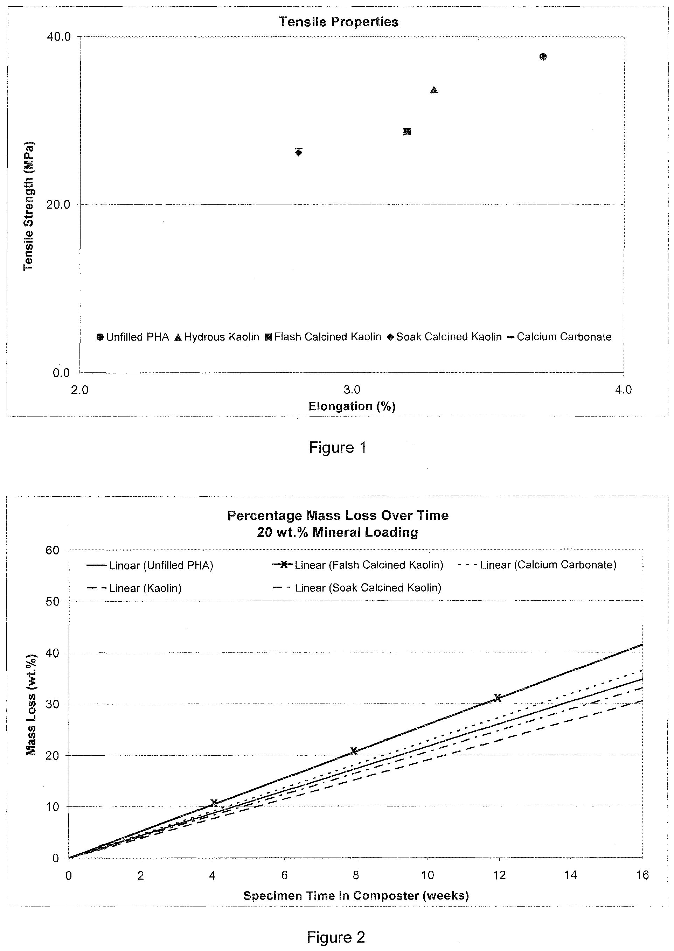

When compared with the unfilled PHA, the addition of 20wt% hydrous kaolin resulted in a 10% reduction in both tensile strength and elongation at break (EOB) values. The flash calcined kaolin gave a further 15% reduction in tensile strength and only a minor drop in the EOB value. Both the addition of the soak calcined kaolin and calcium carbonate resulted in further reductions in tensile strength. The tensile and elongation at break values of the films are shown in Figure 1.

### Colour Measurements

When compared with the unfilled PHA, but with the exception of the hydrous kaolin, the addition of 20wt% mineral resulted in an increased whiteness of the film. The high purity calcium carbonate gave the highest whiteness. The hydrous kaolin filled film gave the highest redness (+a*) value, whilst the flash calcined kaolin gave the greenest film. The unfilled PHA gave a value in between the two. The calcined and hydrous kaolin filled films gave higher yellowness values, whilst both the flash calcined kaolin and calcium carbonate filled films gave significantly less yellowness when compared with the unfilled PHA film. The unfilled and mineral filled PHA film colour measurements are shown in Table 2.

**Table 2: Film colour measurement results.**

| **Specimen** | **L*** | **a* (-Green, +Red)** | **b* (-Blue,+Yellow)** |
|---|---|---|---|
| Unfilled PHA | 86.07 | -0.03 | 8.74 |
| Hydrous Kaolin filled PHA | 84.19 | 0.27 | 10.67 |
| Flash Calcined Kaolin filled PHA | 88.85 | -0.17 | 5.88 |
| Calcined Kaolin filled PHA | 87.38 | 0.10 | 9.44 |
| Calcium Carbonate filled PHA | 90.93 | -0.14 | 5.45 |

### Compostability Results

### (i) Mass loss of composted PHA films

The linear trend lines indicated the flash calcined kaolin had a positive effect that resulted in an accelerated rate of biodegradation, as shown in Figure 2. Flash calcined kaolins are produced by rapid heating of a powdered clay feed to a suitably high temperature. The water contained within the structure results in a controlled expansion, within the kaolin structure, resulting in the formation of sealed and broken voids. Without wishing to be bound by theory, during composting the voids present within the flash calcined kaolin may result in a less torturous path for the ingress of moisture into the polymer structure. As such, hydrolysis of the polymer will be quicker, causing faster chain scission breakage of its polymer backbone leading to the formation of shorter chain lengths that are more susceptible to attack from bacteria and other biological organisms. Polyhydroxyalkanoate is a hydrolysable polymer which is susceptible to biodegradation due to the highly reactive nature of its ester link within its polymer backbone. The initial degradation of PHA occurs by the hydrolysis of its ester link when subjected to an aqueous environment. The result is chain scission breakage of its polymer backbone leading to the formation of shorter chain lengths. The smaller chains are increasingly susceptible to attack from bacteria and other biological organisms. As the surface of the polymer is degraded there is an increase in the polymers porosity that leads to an accelerated diffusion of water into its polymer matrix. The increased porosity facilitates removal of the degradation products from the active surfaces and so accelerates the degradation rate. The secondary degradation steps can include the assimilation of the smaller fragments by flora and fauna within the compost.

### (ii) FT-IR Spectra analysis of composted specimens

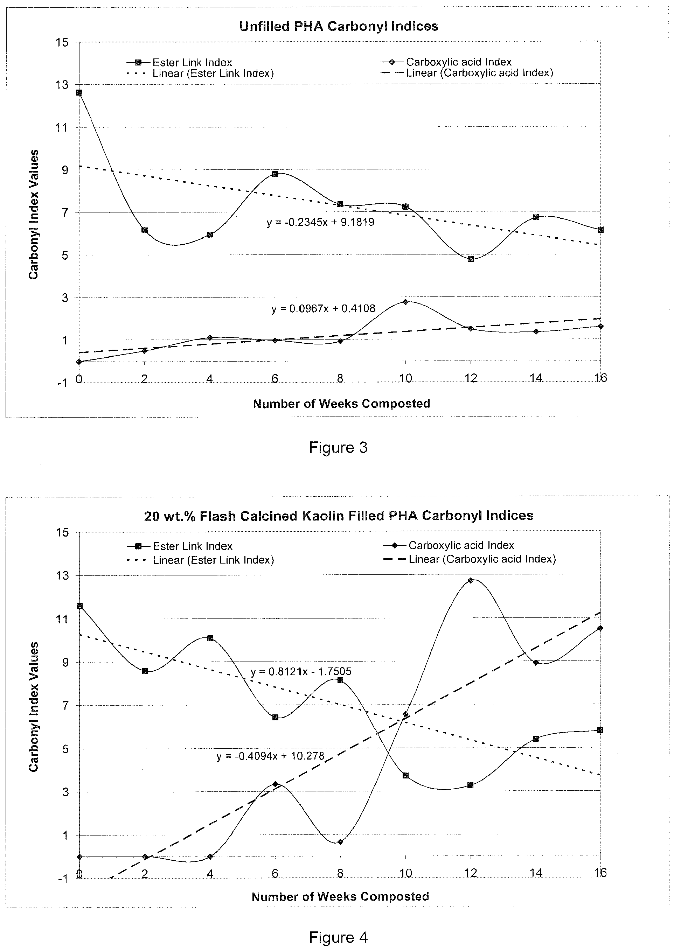

Samples of the composted films were removed every two weeks and degradation assessed by FT-IR by evaluating the conversion of the ester linkage at 1750cm⁻¹ as a result of hydrolysis. The peak areas measurements were taken of the ester peak at 1750cm⁻¹ and growth of a carboxylic acid peak at 1650cm⁻¹ and plotted against composting time. The linear trend lines suggested that of all the films the flash calcined kaolin resulted in an accelerated rate of biodegradation when compared with the unfilled PHA film as shown in Figure 3 and Figure 4. These results support the mass loss values that also indicated that the flash calcined kaolin filled film degraded the quickest.

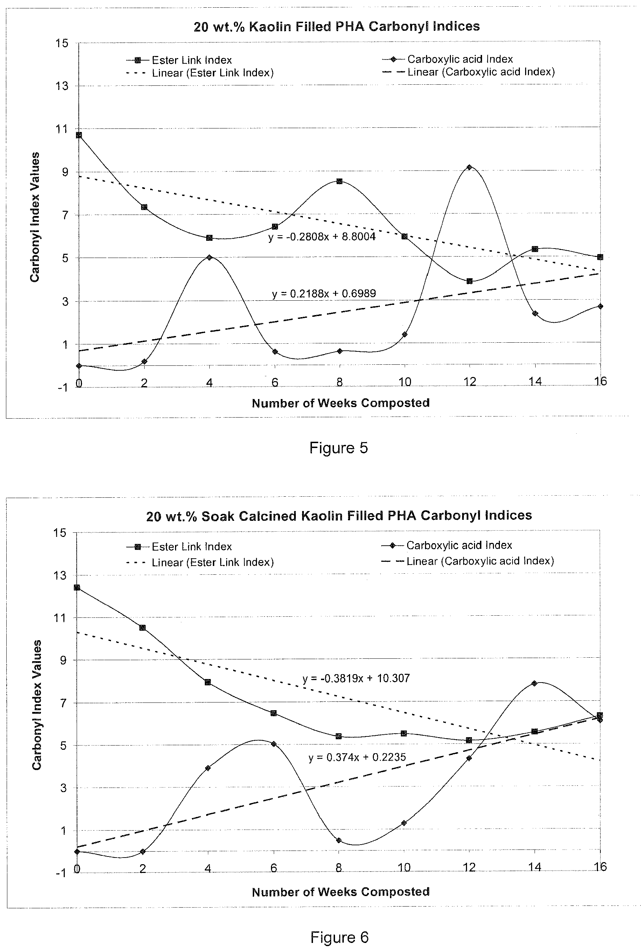

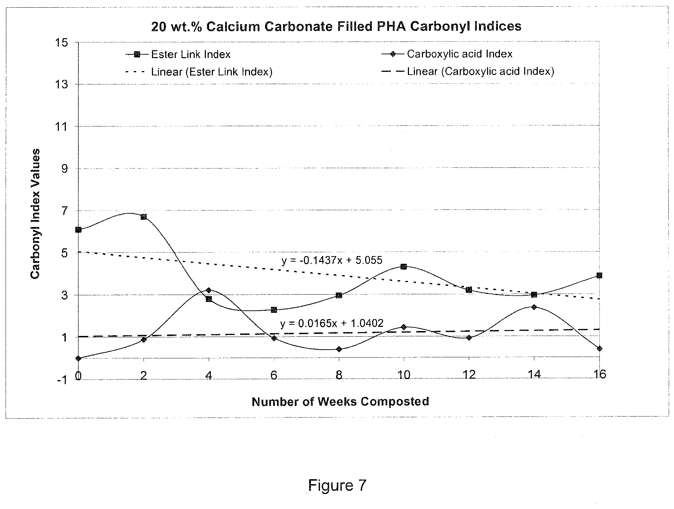

The peak areas measurements taken of the ester peak at 1750 cm⁻¹ and growth of a carboxylic acid peak at 1650 cm⁻¹ and plotted against composting time for the other mineral filled films are given in Figures 5 to 7.

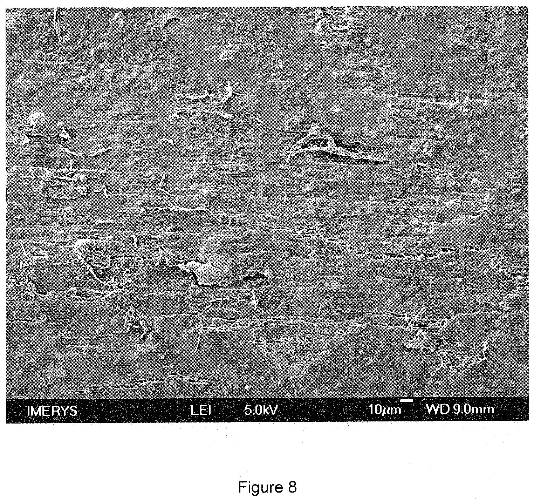

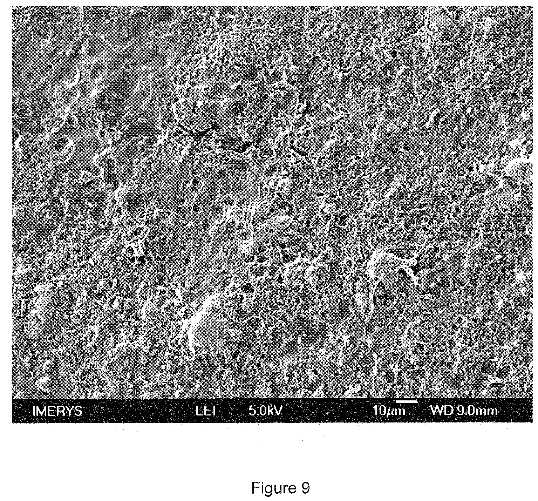

Scanning Electron Microscope (SEM) images shown in Figures 8 and 9 clearly show a difference in the surface properties of the unfilled PHA and the flash calcined kaolin filled PHA after they had been subjected to composting. The porosity seen on the surface of the flash calcined filled PHA supports the theory that the voids present within the flash calcined kaolin resulted in a less torturous path for the ingress of moisture into the polymer structure.

### Conclusions

A significant limitation of biopolymers is their poor melt strength and tendency to stick to processing equipment. The inclusion of the particulate mineral filler in accordance with the present invention resulted in increased melt strength and reduced stickiness of the biopolymer.

The mass loss results and the FT-IR examination of the composted films by evaluation of the conversion of the ester linkage at 1750cm⁻¹ suggested that the addition of a mineral does not negatively impact the compostability of biopolymer. In fact, the trend lines indicated that the inclusion of the flash calcined kaolin resulted in an accelerated biodegradation. Without wishing to be bound by theory, the accelerated biodegradation may be due to the voids present in the structure of the flash calcined kaolin. These voids may result in a less torturous path for the ingress of moisture into the polymer structure so that hydrolysis of the polymer will be quicker. The SEM images shown in Figures 8 and 9 clearly show a difference in the surface properties of the unfilled biopolymer and the flash calcined kaolin filled biopolymer after they had been subjected to composting. The porosity seen on the surface of the flash calcined filled biopolymer supports both the mass loss and FT-IR results that indicated the flash calcined kaolin could promote degradation and improve the compostability of the biopolymer.

The addition of a particulate filler mineral in compositions and biopolymer products in accordance with the present invention not only considerably reduced the cost required in connection with biopolymers, but was shown to significantly improve the processability by increasing melt strength and reducing tackiness. The results indicated that the inclusion of a mineral did not negatively impact the compostability of biopolymers and the mass loss and FT-IR results showed that the inclusion of the flash calcined kaolin resulted in an accelerated biodegradation.

## Claims

1. A composition comprising a biopolymer and a particulate mineral filler wherein the particulate mineral filler comprises a particulate calcined clay, wherein
the particulate calcined clay is calcined kaolin.

2. A composition according to claim 1, wherein the particulate calcined clay is fully calcined.

3. A composition according to claim 1, wherein the particulate calcined clay is partially calcined.

4. A composition according to any one of the previous claims, wherein the calcined clay is soak calcined.

5. A composition according to any one of the previous claims wherein the particulate mineral filler is present in an amount of about 2wt% to about 80wt% or about 60wt% of the total composition, for example about 5wt% to about 20wt%.

6. A composition according to any one of the previous claims, wherein the biopolymer is selected from one or more of the following: polylactic acid (PLA); polyglyconate; poly(dioxanone); polyhydroxyalkanoate (PHA), for example polyhydroxybutyrate (PHB), poly-3-hydroxybutyrate (P3HB), polyhydroxyvalarate (PHV) or poly (3-hydroxybutyrate-co-3-hydroxyvalerate).

7. A production process for the composition in accordance with any one of claims 1 to 6, comprising blending a biopolymer or a precursor of a biopolymer with a particulate mineral filler wherein the particulate mineral filler comprises, or consists of, or consists essentially of a particulate calcined clay which is calcined kaolin, the process optionally further comprising blending additional components and optionally further comprising forming said composition into a biopolymer product or article.

8. A biopolymer product or article formed from or formable from a composition as claimed in any one of claims 1 to 6.

9. A biopolymer product or article according to claim 8, wherein the product or article is suitable for packaging, for example a bag or for packaging consumer products or foodstuffs.

10. A biopolymer product or article according to any one of claims 8 or 9, wherein the product or article is a film.

11. A biopolymer product or article according to claim 10, wherein the film is a breathable film, and wherein the film may have a mean thickness of 5µm to 25µm, for example 8µm to 18µm for example 10µm to 15µm.

12. The use of a biopolymer product or article or breathable film as claimed in any one of claims 8 to 11 for packaging one or more items, for example for packaging foodstuffs or consumer products.

13. Use of a particulate calcined clay as a composting additive in a composition or a product comprising a biopolymer, wherein the particulate calcined clay is in accordance with claim 1.

14. Use according to claim 13, wherein the biopolymer is selected from one or more of the following: polylactic acid (PLA); polyglyconate; poly(dioxanone); polyhydroxyalkanoate (PHA), for example polyhydroxybutyrate (PHB), poly-3-hydroxybutyrate (P3HB), polyhydroxyvalarate (PHV) or poly (3-hydroxybutyrate-co-3-hydroxyvalerate).

## Patentansprüche

1. Zusammensetzung, umfassend ein Biopolymer und einen teilchenförmigen mineralischen Füllstoff, wobei der teilchenförmige mineralische Füllstoff einen teilchenförmigen kalzinierten Ton umfasst, wobei der teilchenförmige kalzinierte Ton kalziniertes Kaolin ist.

2. Zusammensetzung gemäß Anspruch 1, wobei der teilchenförmige kalzinierte Ton vollständig kalziniert ist.

3. Zusammensetzung gemäß Anspruch 1, wobei der teilchenförmige kalzinierte Ton teilweise kalziniert ist.

4. Zusammensetzung gemäß einem der vorherigen Ansprüche, wobei der kalzinierte Ton weichkalziniert ist.

5. Zusammensetzung gemäß einem der vorherigen Ansprüche, wobei der teilchenförmige mineralische Füllstoff in einer Menge von etwa 2 Gew.-% bis etwa 80 Gew.-% oder etwa 60 Gew.-% der Gesamtzusammensetzung, zum Beispiel etwa 5 Gew.-% bis etwa 20 Gew.-%, vorhanden ist.

6. Zusammensetzung gemäß einem der vorherigen Ansprüche, wobei das Biopolymer aus einem oder mehreren der Folgenden ausgewählt ist: Polymilchsäure (PLA); Polyglyconat; Poly(dioxanon); Polyhydroxyalkanoat (PHA), zum Beispiel Polyhydroxybutyrat (PHB), Poly-3-hydroxybutyrat (P3HB), Polyhydroxyvalarat (PHV) oder Poly(3-hydroxybutyrat-co-3-hydroxyvalerat).

7. Herstellungsverfahren für die Zusammensetzung gemäß einem der Ansprüche 1 bis 6, umfassend ein Mischen eines Biopolymers oder eines Vorläufers eines Biopolymers mit einem teilchenförmigen mineralischen Füllstoff, wobei der teilchenförmige mineralische Füllstoff einen teilchenförmigen kalzinierten Ton, bei dem es sich um kalziniertes Kaolin handelt, umfasst oder daraus besteht oder im Wesentlichen daraus besteht, wobei das Verfahren optional ferner ein Mischen zusätzlicher Komponenten umfasst und optional ferner ein Formen der Zusammensetzung zu einem Biopolymerprodukt oder -gegenstand umfasst.

8. Biopolymer-Produkt oder -Gegenstand, gebildet aus oder formbar aus einer Zusammensetzung gemäß einem der Ansprüche 1 bis 6.

9. Biopolymerprodukt oder -gegenstand gemäß Anspruch 8, wobei das Produkt oder der Gegenstand zum Verpacken geeignet, zum Beispiel ein Beutel, oder zum Verpacken von Konsumgütern oder Lebensmitteln, ist.

10. Biopolymerprodukt oder -gegenstand gemäß einem der Ansprüche 8 oder 9, wobei das Produkt oder der Gegenstand ein Film ist.

11. Biopolymerprodukt oder -gegenstand gemäß Anspruch 10, wobei der Film ein atmungsaktiver Film ist und wobei der Film eine mittlere Stärke von 5 µm bis 25 µm, beispielsweise 8 µm bis 18 µm, beispielsweise 10 µm bis 15 µm, aufweisen kann.

12. Verwendung eines Biopolymerprodukts oder -gegenstands oder eines atmungsaktiven Films gemäß einem der Ansprüche 8 bis 11 zum Verpacken eines oder mehrerer Elemente, beispielsweise zum Verpacken von Lebensmitteln oder Konsumgütern.

13. Verwendung eines teilchenförmigen kalzinierten Tons als Kompostierungsadditiv in einer Zusammensetzung oder einem Produkt, das ein Biopolymer umfasst, wobei der teilchenförmige kalzinierte Ton gemäß Anspruch 1 ist.

14. Verwendung gemäß Anspruch 13, wobei das Biopolymer ausgewählt ist aus einem oder mehreren der Folgenden Polymilchsäure (PLA); Polyglyconat; Poly(dioxanon); Polyhydroxyalkanoat (PHA), zum Beispiel Polyhydroxybutyrat (PHB), Poly-3-hydroxybutyrat (P3HB), Polyhydroxyvalarat (PHV) oder Poly(3-hydroxybutyrat-co-3-hydroxyvalerat).

## Revendications

1. Une composition comprenant un biopolymère et une charge minérale particulaire dans laquelle la charge minérale particulaire comprend une argile calcinée particulaire, dans laquelle l'argile calcinée particulaire est du kaolin calciné.

2. Une composition selon la revendication 1, dans laquelle l'argile calcinée particulaire est entièrement calcinée.

3. Une composition selon la revendication 1, dans laquelle l'argile calcinée particulaire est partiellement calcinée.

4. Une composition selon l'une quelconque des revendications précédentes, dans laquelle l'argile calcinée est calcinée par trempage.

5. Une composition selon l'une quelconque des revendications précédentes dans laquelle la charge minérale particulaire est présente en une quantité d'environ 2 % en poids à environ 80 % en poids ou environ 60 % en poids de la composition totale, par exemple d'environ 5 % en poids à environ 20 % en poids.

6. Une composition selon l'une quelconque des revendications précédentes, dans laquelle le biopolymère est choisi parmi un ou plusieurs des éléments suivants : acide polylactique (PLA) ; polyglyconate ; poly(dioxanone) ; polyhydroxyalcanoate (PHA), par exemple polyhydroxybutyrate (PHB), poly-3-hydroxybutyrate (P3HB), polyhydroxyvalérate (PHV) ou poly (3-hydroxybutyrate-co-3-hydroxyvalérate).

7. Un procédé de production de la composition selon l'une quelconque des revendications 1 à 6, comprenant le mélange d'un biopolymère ou d'un précurseur d'un biopolymère avec une charge minérale particulaire dans lequel la charge minérale particulaire comprend, ou consiste en, ou consiste essentiellement en une argile calcinée particulaire qui est du kaolin calciné, le procédé comprenant éventuellement en outre le mélange de composants supplémentaires et comprenant éventuellement en outre la formation de ladite composition en un produit ou article biopolymère.

8. Un produit ou article biopolymère formé ou pouvant être formé à partir d'une composition selon l'une quelconque des revendications 1 à 6.

9. Un produit ou article biopolymère selon la revendication 8, dans lequel le produit ou l'article est approprié pour l'emballage, par exemple un sac ou pour l'emballage de produits de consommation ou de denrées alimentaires.

10. Un produit ou article biopolymère selon l'une quelconque des revendications 8 ou 9, dans lequel le produit ou l'article est un film.

11. Un produit ou article biopolymère selon la revendication 10, dans lequel le film est un film respirant, et dans lequel le film peut avoir une épaisseur moyenne de 5 µm à 25 µm, par exemple de 8 µm à 18 µm, par exemple de 10 µm à 15 µm.

12. L'utilisation d'un produit ou article biopolymère ou d'un film respirant selon l'une quelconque des revendications 8 à 11 pour l'emballage d'un ou plusieurs objets, par exemple pour l'emballage de denrées alimentaires ou de produits de consommation.

13. Utilisation d'une argile calcinée particulaire comme un additif de compostage dans une composition ou un produit comprenant un biopolymère, dans laquelle l'argile calcinée particulaire est conforme à la revendication 1.

14. Utilisation selon la revendication 13, dans laquelle le biopolymère est choisi parmi un ou plusieurs des éléments suivants : acide polylactique (PLA) ; polyglyconate ; poly(dioxanone) ; polyhydroxyalcanoate (PHA), par exemple polyhydroxybutyrate (PHB), poly-3-hydroxybutyrate (P3HB), polyhydroxyvalérate (PHV) ou poly (3-hydroxybutyrate-co-3-hydroxyvalérate).
